# EUROPEAN PATENT APPLICATION

(11) **EP 4 687 365 A1**
(43) Date of publication of application: **04.02.2026**
(21) Application number: 25191825.6
(22) Date of filing: 25.07.2025
(51) Int. Cl.: H04W 52/02, H04W 24/10, H04W 68/00

(54) **METHOD AND APPARATUS FOR BEAM MANAGEMENT FOR LOW-POWER SIGNAL TRANSMISSION AND RECEPTION**

(30) Priority: 30.07.2024 KR 20240100950; 23.06.2025 KR 20250082344
(71) Applicant: KT Corporation, Seongnam-si, Gyeonggi-do 13606 (KR)
(72) Inventor: PARK, Ki-hyeon, 13606 Seongnam-si, Gyeonggi-do (KR)
(74) Representative: BCKIP Part mbB

(57) **Abstract**

Provided are a method and apparatus for beam management for low-power signal transmission and reception in a wireless communication system. A terminal operates in a low-power wake-up receiver (LP-WUR) mode and receives a low-power synchronization signal (LP-SS) from a base station in the LP-WUR mode. Subsequently, the terminal performs synchronization based on the received LP-SS, wherein the LP-SS has a quasi co-location (QCL) relationship with a synchronization signal block (SSB).

## Description

### CROSS-REFERENCE TO RELATED THE APPLICATION

This application is based on and claims priority on Patent Application No. 10-2024-0100950 filed on Jul. 30, 2024 and No. 10-2025-0082344 filed on Jun. 23, 2025 in the Korean Intellectual Property Office.

### BACKGROUND

### Technical Field

The present disclosure relates to wireless communication applicable to 5G NR, 5G-Advanced and 6G.

### Description of the Related Art

With the increase in the number of communication devices, there is a consequent rise in communication traffic that needs to be managed. To handle this increased communication traffic, a next generation 5G system, which is an enhanced mobile broadband communication system compared to the existing LTE system, has become necessary. Such a next generation 5G system has been developed based on scenarios that are classified into Enhanced Mobile BroadBand (eMBB), Ultra-reliable and low-latency communication (URLLC), Massive Machine-Type Communications (mMTC), and the like.

eMBB, URLLC, and mMTC represent next generation mobile communication scenarios. eMBB is characterized by high spectral efficiency, high user experienced data rate, and high peak data. URLLC is characterized by ultra-reliability, ultra-low latency, and ultra-high availability (e.g., vehicle-to-everything (V2X), Emergency Service, Remote Control). mMTC is characterized by low cost, low energy consumption, short packet transmission, and massive connectivity (e.g., Internet of Things (IoT)).

### SUMMARY

The disclosure is to provide a method and apparatus for beam management for low-power signal transmission and reception in a wireless communication system.

According to an embodiment, a method of a terminal may be provided for operating in a wireless communication system. The method of the terminal may include operating in low-power wake-up receiver (LP-WUR) mode, receiving a low-power synchronization signal (LP-SS) in the LP-WUR mode, and performing synchronization based on the received LP-SS. Here, the LP-SS has a quasi co-location (QCL) relationship with a synchronization signal block (SSB).

According to another embodiment, a terminal may be provided for operating in a wireless communication system. The terminal may include at least one processor; and at least one memory configured to store instructions and operably electrically connectable to the at least one processor, wherein operations performed based on the instructions executed by the at least one processor include: receiving a low-power synchronization signal (LP-SS) in the LP-WUR mode, and performing synchronization based on the received LP-SS. Here, the LP-SS has a quasi co-location (QCL) relationship with a synchronization signal block (SSB).

Additionally, the terminal may receive a low-power wake-up signal (LP-WUS) from a base station, and may monitor a physical downlink control channel (PDCCH) or paging based on the received LP-WUS. Here, the LP-WUS may be received through at least one monitoring occasion (MO) within a single LP-WUS occasion. Further, a number of the at least one MO within the LP-WUS occasion may be based on a number of indexes available for the LP-SS.

Meanwhile, the LP-SS and the SSB may have a one-to-one correspondence, which may be based on an index of the LP-SS and an index of the SSB.

The terminal may receive configuration information of the LP-WUS from the base station, and the configuration information of the LP-WUS may include QCL relationship information with at least one of the SSB and a channel state information-reference signal (CSI-RS).

### BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIG. 7 is a diagram illustrating an exemplary operation of a terminal configured with a low-power wake-up receiver (LP-WUR).
FIG. 8 is a diagram illustrating an example of transmission and reception of a synchronization signal block (SSB), a low-power synchronization signal (LP-SS), and a low-power wake-up signal (LP-WUS) according to an embodiment.
FIG. 9 is a flowchart showing a method of operating a terminal according to an embodiment.
FIG. 10 is a block diagram showing apparatuses according to an embodiment of the disclosure.
FIG. 11 is a block diagram showing a terminal according to an embodiment of the disclosure.
FIG. 12 is a block diagram of a processor in accordance with an embodiment.
FIG. 13 is a detailed block diagram of a transceiver of a first apparatus shown in FIG. 10 or a transceiving unit of an apparatus shown in FIG. 11.

### DETAILED DESCRIPTION

The technical terms used in this document are for merely describing specific embodiments and should not be considered limiting the embodiments of disclosure. Unless defined otherwise, the technical terms used in this document should be interpreted as commonly understood by those skilled in the art without being unduly broad or unduly narrow. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

A base station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on a long term evolution (LTE) system, an LTE-advanced (LTE-A) system, and a new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires ultra-wideband mobile data transmission.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

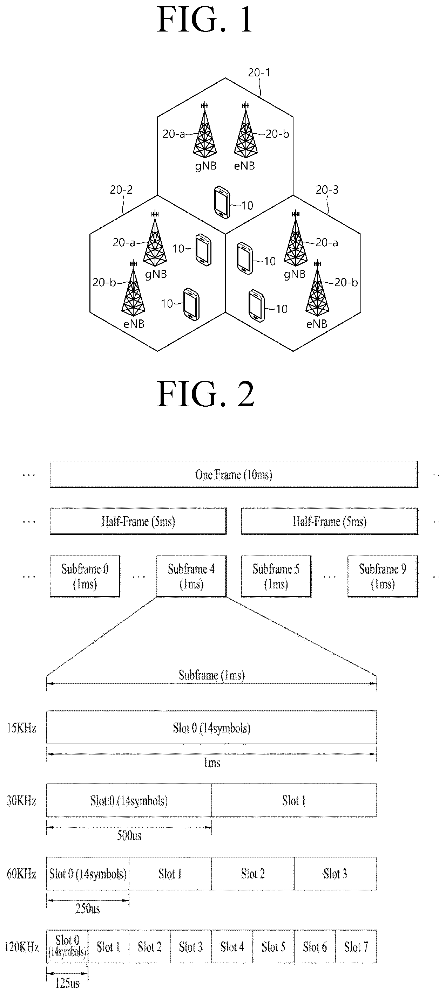

**FIG. 1** **is a diagram illustrating a wireless communication system.**

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

**FIG. 2** **is a diagram illustrating a structure of a radio frame used in new radio (NR).**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

### <Support of Various Numerologies>

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by µ).

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot (N^{slot}_{symb}), the number of slots per frame (N^{fame,µ}ₛₗₒₜ), and the number of slots per subframe (N^{subframe,µ}ₛₗₒₜ) according to each numerology expressed by µ in the case of a normal CP.

**[Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) of a numerology represented by µ in the case of an extended CP.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

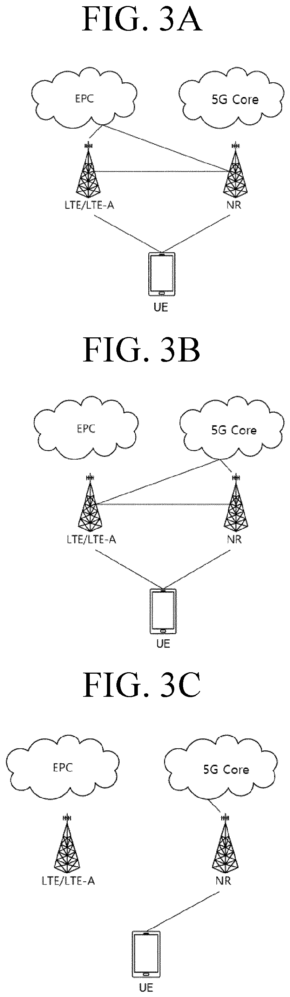

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

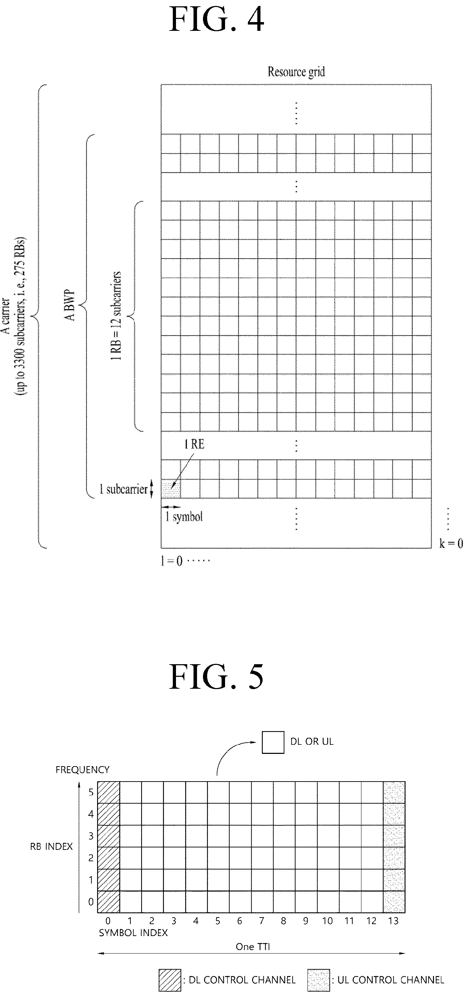

**FIG. 4** **illustrates a slot structure of an NR frame.**

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

**FIG. 5** **shows an example of a subframe type in NR.**

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in a single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

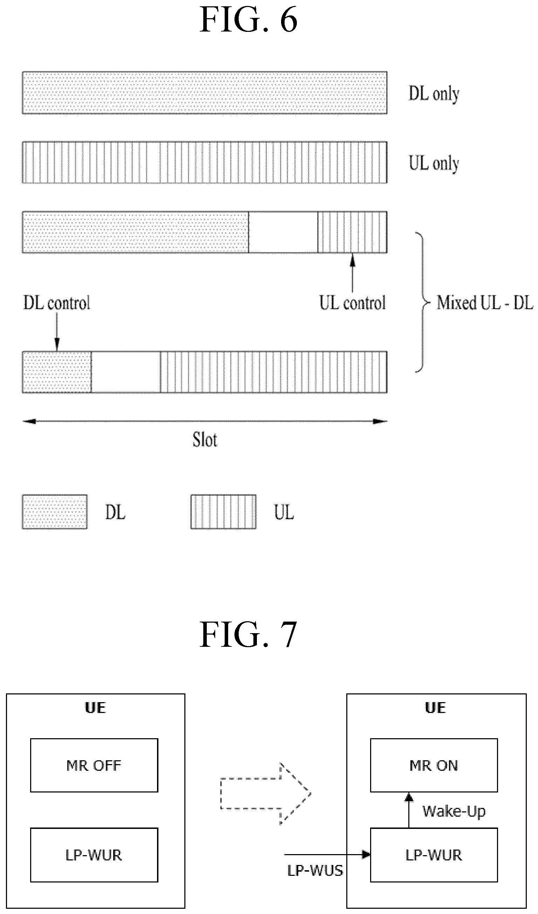

**FIG. 6** **illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting a UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.
1. DL only configuration
2. UL only configuration
3. Mixed UL-DL configuration

- DL region + Guard Period (GP) + UL control region
- DL control region + GP + UL region

DL region: (i) DL data region, (ii) DL control region + DL data region
UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some symbols within a subframe that transition from DL to UL mode may be configured as the GP.

In typical 3GPP NR, various technologies have been employed to reduce the power consumption of a terminal, such as operating in idle/inactive states and introducing transmission schemes like Discontinuous Transmission (DTX) and Discontinuous Reception (DRX). Additionally, in the power-saving feature introduced in 3GPP Release 16, a mechanism was adopted to reduce blind decoding for PDCCH monitoring in the next cycle under DTX/DRX conditions. Specifically, a Downlink Control Information (DCI) message is transmitted in a prior period to indicate the necessity of transmission in the upcoming period. This mechanism is commonly referred to as a UE Wake-Up Signal (WUS). The Wake-Up Signal (WUS) is transmitted using DCI Format 2-6 within a designated search space defined for transmitting the corresponding DCI. The DCI contains specific contents, and it is scrambled using a dedicated Radio Network Temporary Identifier (RNTI) called the Power Saving-RNTI (PS-RNTI).
- block number 1, block number 2, ..., block number N

Block-related information is configured, including its location, through RRC signaling. Each block comprises one bit for wake-up indication and a predefined number of bits (ranging from 0 to 5) for Scell dormancy indication. By receiving this signal, the terminal can determine whether it needs to perform PDCCH monitoring for reception in the next DRX cycle. If the signal indicates that reception is not necessary, the terminal can skip both transmission and reception for that cycle.

Meanwhile, a terminal in the idle state periodically checks through paging whether it needs to transition to the connected state. Paging is configured for each user group, and to prevent unnecessary paging within the same group, thereby reducing additional power consumption, the enhanced UE power-saving feature introduced in 3GPP Release 17 enables more targeted paging message transmission through a message called Paging Early Indication (PEI). This message is transmitted using DCI Format 2-7 and is delivered through a specifically defined search space for this DCI transmission. The DCI contains specific contents and is scrambled using a special RNTI called PEI-RNTI.
- PEI (Paging Early Indication): The size is determined by an upper layer, and each UE is assigned a specific position. If the bit at the assigned position is set to 1, the UE reads the next paging occasion.

### TRS (Tracking Reference Signal) Availability Indication: Provided when necessary.

Meanwhile, due to the requirements of technologies such as Ambient IoT and Reduced Capability (RedCap), the need for more extensive power savings in terminals has emerged. As a result, the standardization of a Low-Power Wake-Up Signal (LP-WUS) and a corresponding Low-Power Wake-Up Receiver (LP-WUR), which supports reduced standby power consumption at the hardware level, has been agreed upon. In particular, the work item (WI) of 3GPP Release 19 discusses the standardization methods for LP-WUS and LP-WUR, and objectives such as those shown in Table 5 have been established.

**[Table 5]**

| |
|---|
| To specify an LP-WUS design commonly applicable to both IDLE/INACTIVE and CONNECTED modes (RAN1, RAN4) |
| > Specify OOK (OOK-1 and/or OOK-4) based LP-WUS with overlaid OFDM sequence(s) over OOK symbol |
| >> The LP-WUS design shall ensure that for IDLE/INACTIVE operation, the same information is delivered irrespective of LP-WUR type. The OFDM sequence can carry information. |
| > At least duty-cycled monitoring of LP-WUS is supported. |
| For IDLE/INACTIVE modes |
| > Specify procedure and configuration of LP-WUS indicating paging monitoring triggered by LP-WUS, including at least configuration, sub-grouping and entry/exit condition for LP-WUS monitoring (RAN2, RAN1, RAN3, RAN4) |
| > Specify LP-SS with periodicity with Yms for LP-WUR, for synchronization and/or RRM for serving cell. (RAN1, RAN4) |
| >> LP-SS is based on OOK-1 and/or OOK-4 waveform with or without overlaid OFDM sequences. Further down selection between with and without overlaid OFDM sequences is to be done within WI. |
| >> Note: For LP-WUR that can receive existing PSS/SSS, existing PSS/SSS can be used for synchronization and RRM instead of LP-SS. |
| >> Y will be decided within WI. 320ms is the start point. |
| > Specify further RRM relaxation of UE MR for both serving and neighbor cell measurements, and UE serving cell RRM measurement offloaded from MR to LP-WUR, including the necessary conditions (RAN4, RAN2) |
| For CONNECTED mode, specify procedures to allow UE MR PDCCH monitoring triggered by LP-WUS including activation and deactivation procedure of LP-WUS monitoring (RAN2, RAN1) |
| > Check in RAN#105 for potential TU adjustment in RAN2 |
| > Note: In CONNECTED mode, UE MR ultra-deep sleep is not considered, and UE RRM/RLM/BFD/CSI measurements are performed by MR |
| Note: The target coverage of LP-WUS and LP-SS shall be the coverage of PUSCH for message3. |
| Note: The optimization of LP-WUS signal design for idle/inactive mode is prioritized over the optimization for connected mode. |
| Specify the necessary RAN4 core requirement(s) to support the feature (RAN4). |
| > Specify UE low-power wake-up receiver requirements, at least REFSENS, ACS and ASCS requirements with consideration of possible new methodology to assess the low-power wake-up receiver performance |
| >> Define guard RBs for ACS and ASCS cases |
| >> Study testability of above requirements |
| >> Consider impacts of different architecture and impairments, and set requirements that enable all types of reasonable implementation |
| > Study and if necessary specify or support by declaration, the corresponding BS requirements, e.g., dynamic range for LP-WUS/LP-SS. |
| >> Current NR BS requirements is baseline |
| >> Specify necessary RRM requirements |

As described in the objective of Table 5, the introduction of signals for reception by a low-power receiver, i.e., the LP-WUS (Low-Power Wake-Up Signal) and the synchronization signal LP-SS (Low-Power Synchronization Signal), has been determined. In addition, the introduction of an overlaid OFDM sequence added to each LP-WUS signal has been determined to enable additional information acquisition at an OFDM receiver.

**FIG. 7** **is a diagram illustrating an exemplary operation of a terminal configured with a low-power wake-up receiver (LP-WUR).**

The Low-Power Wake-Up Receiver (LP-WUR) is defined as a receiver that can only receive wake-up signals and essential signals related to them, separate from the transceiver traditionally used for data transmission and reception. When a terminal enters deep sleep mode or low-power WUR mode, the transceiver (i.e., the Main Radio, MR) that was used for transmitting and receiving NR signals/channels is turned off (or stops PDCCH monitoring), and only the LP-WUR is turned on to receive the wake-up signal and associated essential signals through the LP-WUR. This setup is expected to drastically reduce the terminal's power consumption. At this point, the terminal that receives the wake-up signal through the LP-WUR may be instructed to switch to MR mode. Upon receiving this instruction, the terminal switches from LP-WUR to MR mode and can perform communication via the transceiver used for conventional NR data transmission and reception. FIG. 7 schematically illustrates the operation of a terminal configured with the LP-WUR as described above.

Meanwhile, NR signals are based on OFDM and comprise a set of resource elements (RE) with a symbol duration for each subcarrier. However, the LP-WUS must use a structure that allows for reception with relatively lower power compared to an OFDM receiver, meaning that a different type of signal from typical OFDM may be used. Therefore, beam characteristics and other related aspects need to be newly considered, and in particular, beam-based operation should be supported to ensure coverage equivalent to that of the existing Main Radio (MR). However, with respect to beam-based operation, agreement has only been reached on introducing multiple monitoring occasions (MOs) transmitted via different beams within a single LP-WUS occasion (LO).

To address such issues, the present invention provides a beam management method for performing beam-based transmission in LP-WUS of a 3GPP NR system. For example, the invention may include a method for configuring and managing multiple LP-SSs that are transmitted via different beams.

In the present disclosure, (1) a method of configuring multiple LP-SSs, (2) a method of operating CSI based on LP-SS, (3) a method of operating LP-WUS for CSI using a dedicated beam, and (4) a method of transmitting beam information in LP-WUS are provided. For convenience of description, each method is described separately below; however, the content described for a particular method may be combined and operated with the content described for other methods.

### (1) A method of configuring multiple LP-SSs

This method is directed to operating multiple LP-SS occasions within an LP-SS transmission period where multiple LP-SS transmissions are possible. For this purpose, the maximum number of occasions may be determined based on the frequency band, for example, FR1 or FR2, and the subcarrier spacing (SCS). Additionally, the time position or interval-related values of each occasion may be determined. Each occasion is managed in the form of an index, and the index-related value may be included in the payload of the LP-SS.

In particular, the index of the LP-SS and the index of the SSB may be quasi co-located (QCL) respectively. This may take the form where the SSB and LP-SS signals corresponding to the same index value are QCLed, or the QCLed index may be explicitly indicated during LP-SS configuration. Alternatively, a QCL relationship with a pre-configured CSI-RS may be indicated. To enable operations in which an SSB and LP-SS signals with the same index are QCLed, the number of LP-SS occasions may be set equal to the number of SSB occasions. Alternatively, the positions of the actual SSB and LP-SS to be used, as specified by the RRC parameter ssb-PositionInBurst, may be linked.

Regarding time positions, the LP-SS transmission occasion (LO_S) within a period may be defined by a time offset and length. Multiple LP-SS occasions (MO_S) may be defined within the LO_S. When multiple LO_Ss or MO_Ss are defined, the length of each, the number of MO_Ss within an LO_S, the spacing between MO_Ss, and the spacing between LO_Ss may vary depending on the frequency band and/or subcarrier spacing (SCS). Such relationships may be specified in the standard.

### (2) A method of operating CSI based on LP-SS

The method relates to managing signal quality based on LP-SS. For this purpose, the base station may instruct the terminal to feedback the index of the best LP-SS among multiple pre-configured LP-SSs. Alternatively, the terminal may be instructed to feedback the indices of the best LP-SSs up to a pre-configured number, along with LP-RSRQ (Low Power-Reference Signal Received Quality), LP-RSRP (Low Power-Reference Signal Received Power), and LP-RS SI (Low Power-Received Signal Strength Indicator) values. Alternatively, CSI feedback information may be configured based on the indices of the LP-SSs, enabling feedback of quality information for each index.

In this case, the LP-RSRQ, LP-RSRP, and LP-RSSI values may be operated as differences from the corresponding values of an LP-SS index that is quasi co-located (QCL) with a previously operated SSB, that is, for which a QCL relationship is established.

### (3) A method of operating LP-WUS for CSI using a dedicated beam

This method relates to operating a dedicated LP-WUS for CSI operation. This is operated separately from the existing LP-WUS for UE wake-up and is instructed in advance along with CSI-RS, allowing the terminal to measure only the reception quality.

For example, when configuring a specific LP-WUS, a QCL relationship with an SSB or a specific CSI-RS other than an SSB may be pre-indicated. This QCL relationship may be configured by providing an SSB/CSI-RS index or a Transmission Configuration Indicator (TCI) index value. CSI feedback based on such a specific LP-WUS may be configured, and the terminal may be instructed to feedback the index of the best LP-SS/WUS among multiple LP-SSs/WUSs. Alternatively, the terminal may be instructed to feedback LP-RSRQ, LP-RSRP, and LP-RSSI values of the best LP-SSs/WUSs up to a pre-configured number.

### (4) A method of transmitting beam information

This method relates to conveying beam information of an LP-WUS transmitted for the actual wake-up of a UE. For this purpose, an index of an LP-SS or an LP-WUS used for CSI that is quasi co-located (QCL) with the LP-WUS may be indicated to the UE during LP-WUS configuration in advance. This index may be designated as a single value or as one of multiple values. It may correspond to the indices of QCLed signals corresponding to the temporal positions of each monitoring occasion (MO) when configuring MOs for a transmission occasion (LO). In a special case where only LP-SS is used, the number of MOs within an LO may be determined by the number of LP-SS indices used, and the QCL relationship may be indicated according to a predefined order.

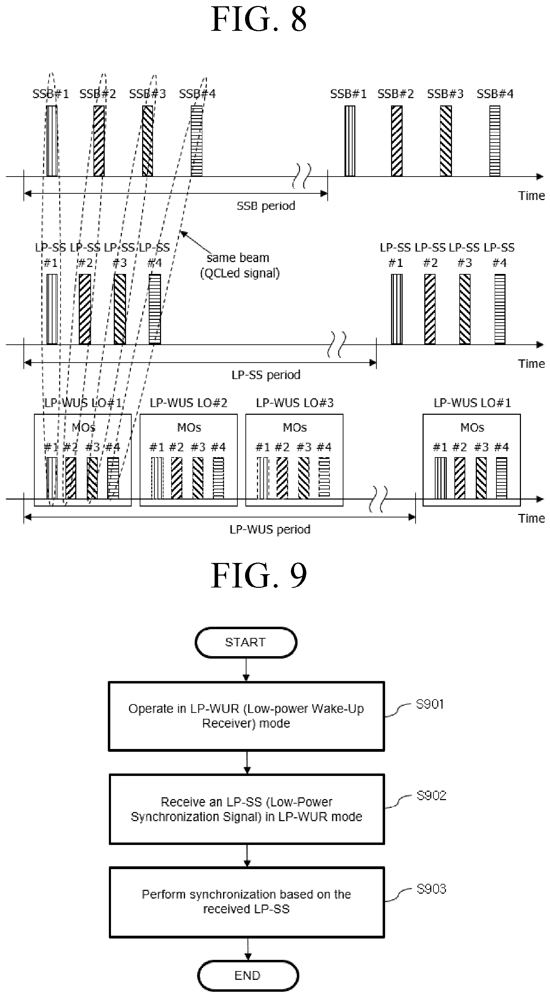

**FIG. 8** **is a diagram illustrating an example of transmission and reception of a synchronization signal block (SSB), a low-power synchronization signal (LP-SS), and a low-power wake-up signal (LP-WUS) according to an embodiment.**

FIG. 8 illustrates an example of transmission and reception of SSB, LP-SS, and LP-WUS based on (1) the method of configuring multiple LP-SSs, (2) the method of operating CSI based on LP-SS, (3) the method of operating LP-WUS for CSI using a dedicated beam, and (4) the method of transmitting beam information in LP-WUS, as described above.

Referring to FIG. 8, the SSB, LP-SS, and LP-WUS may be repeatedly transmitted based on their respective transmission periods. During each period, multiple SSBs, multiple LP-SSs, and multiple LP-WUSs may be transmitted. Regarding LP-WUS transmission, multiple LO (LP-WUS occasions) may be defined, and multiple MO (monitoring occasions) may be defined within each LO.

The LP-SS may have a quasi co-location (QCL) relationship with the SSB, and the LP-WUS may also have a QCL relationship with the SSB. The LP-SS or LP-WUS may correspond to the SSB in a one-to-one manner. This may be configured based on the respective indices of the LP-SS, LP-WUS, and SSB. FIG. 8 illustrates an example where the SSB and LP-SS/LP-WUS with the same index value have a QCL relationship. However, this is merely an example, and a QCL relationship may also be established between SSB and LP-SS/LP-WUS having different index values. When the terminal receives the LP-SSALP-WUS, it may refer to the QCL-related SSB and treat them as the same beam. (As an example in FIG. 8, LP-SS#4/LP-WUS#4 have a QCL relationship with SSB#4.)

Although FIG. 8 illustrates an example using SSB, a CSI-RS may be used instead of the SSB.

**FIG. 9** **is a flowchart showing a method of operating a terminal according to an embodiment.**

Referring to FIG. 9, the terminal operates in a low-power wake-up receiver (LP-WUR) mode (S901). The terminal receives a low-power synchronization signal (LP-SS) from a base station in the LP-WUR mode (S902). The terminal performs synchronization based on the received LP-SS (S903). The LP-SS has a quasi co-location (QCL) relationship with a synchronization signal block (SSB).

Additionally, the terminal may receive a low-power wake-up signal (LP-WUS) from the base station and monitor a physical downlink control channel (PDCCH) or paging based on the received LP-WUS. Here, the LP-WUS may be received through at least one monitoring occasion (MO) within a single LP-WUS occasion. Further, the number of the at least one MO within the LP-WUS occasion may be based on the number of indexes available for the LP-SS.

Meanwhile, the LP-SS and the SSB may have a one-to-one correspondence, which may be based on an index of the LP-SS and an index of the SSB.

The terminal may receive configuration information of the LP-WUS from the base station, and the configuration information of the LP-WUS may include QCL relationship information with at least one of the SSB and a channel state information-reference signal (CSI-RS). In other words, the SSB and/or CSI-RS may serve as the QCL source for the LP-WUS, and related information may be included in the LP-WUS configuration information.

The embodiments described up to now may be implemented through various means. For example, the embodiments may be implemented by hardware, firmware, software, or a combination thereof. Further, details will be provided with reference to the accompanying drawings.

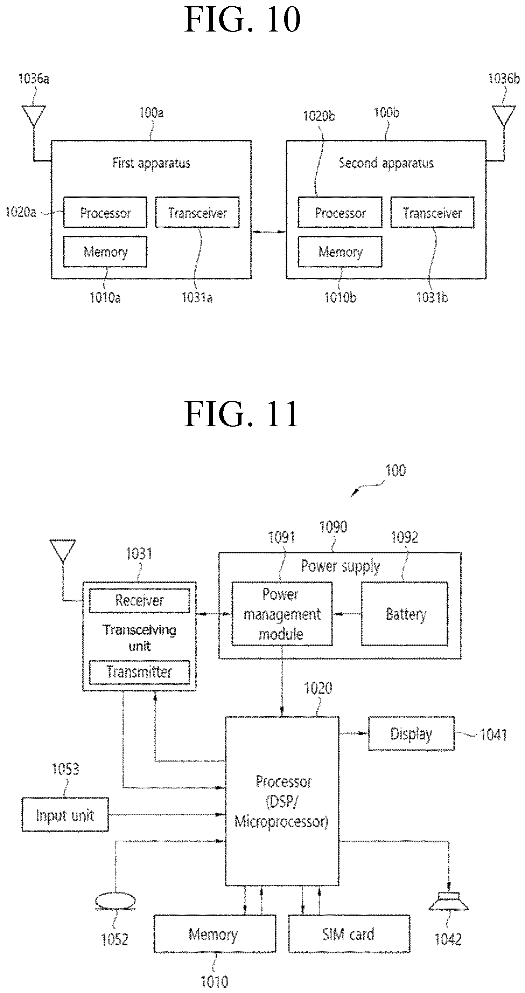

**FIG. 10** **is a block diagram showing apparatuses according to an embodiment of the disclosure.**

Referring to FIG. 10, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 103 1a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected internally or externally to the processor 1020a and/or the processor 1020b and connected to other processors through various technologies such as wired or wireless connections.

The first apparatus 100a and/or the second apparatus 100b may have one or more antennas. For example, an antenna 1036a and/or an antenna 1036b may be configured to transceive a radio signal.

**FIG. 11** **is a block diagram showing a terminal according to an embodiment of the disclosure.**

In particular, FIG. 11 illustrates the previously described apparatus of FIG. 10 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some of constituent elements are referred to as a unit in the disclosure. However, the embodiments are not limited thereto. For example, such term "unit" is also referred to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and convert a signal to baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

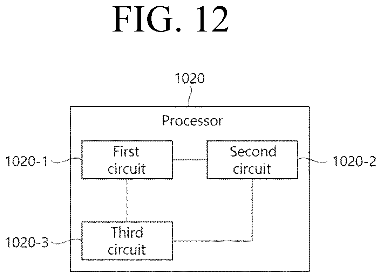

**FIG. 12** **is a block diagram of a processor in accordance with an embodiment.**

Referring to FIG. 12, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

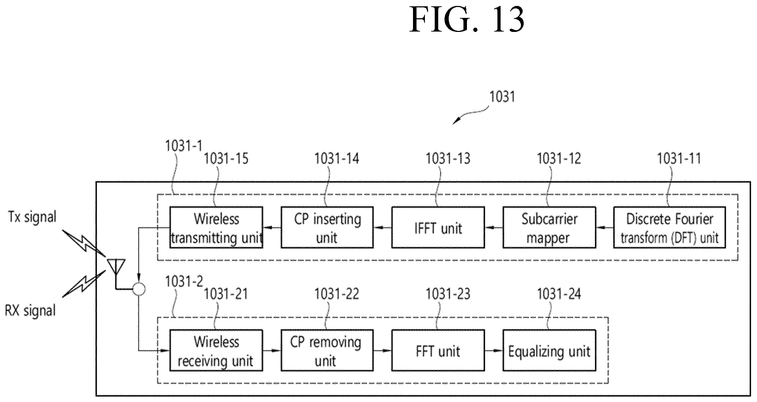

**FIG. 13** **is a detailed block diagram of a transceiver of a first apparatus shown in** **FIG. 10** **or a transceiving unit of an apparatus shown in** **FIG. 11****.**

Referring to FIG. 13, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements are referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, in a transmission and reception environment where a low-power wake-up signal (LP-WUS) is transmitted in a manner different from conventional NR in a wireless communication system, beam-based transmission and reception may be performed to enable transmission with wider coverage.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method of a terminal to operate in a wireless communication system, the method comprising:
operating in low-power wake-up receiver (LP-WUR) mode;
receiving a low-power synchronization signal (LP-SS) in the LP-WUR mode; and
performing synchronization based on the received LP-SS,
wherein the LP-SS has a quasi co-location (QCL) relationship with a synchronization signal block (SSB).

2. The method of claim 1, further comprising:
receiving a low-power wake-up signal (LP-WUS); and
monitoring a physical downlink control channel (PDCCH) or paging based on the received LP-WUS.

3. The method of claim 2, wherein the LP-WUS is received through at least one monitoring occasion (MO) within a single LP-WUS occasion.

4. The method of claim 1, wherein the LP-SS and the SSB have a one-to-one correspondence.

5. The method of claim 4, wherein the one-to-one correspondence between the LP-SS and the SSB is based on an index of the LP-SS and an index of the SSB.

6. The method of claim 2, further comprising:
receiving configuration information of the LP-WUS,
wherein the configuration information of the LP-WUS includes QCL relationship information with at least one of the SSB and a channel state information-reference signal (CSI-RS).

7. The method of claim 3, wherein a number of the at least one MO is based on a number of indexes available for the LP-SS.

8. A terminal in a wireless communication system, comprising:
at least one processor; and
at least one memory configured to store instructions and operably electrically connectable to the at least one processor,
wherein operations performed based on the instructions executed by the at least one processor comprise:
operating in low-power wake-up receiver (LP-WUR) mode;
receiving a low-power synchronization signal (LP-SS) in the LP-WUR mode; and
performing synchronization based on the received LP-SS,
wherein the LP-SS has a quasi co-location (QCL) relationship with a synchronization signal block (SSB).

9. The terminal of claim 8, wherein operations performed based on the instructions executed by the at least one processor further comprise:
receiving a low-power wake-up signal (LP-WUS); and
monitoring a physical downlink control channel (PDCCH) or paging based on the received LP-WUS.

10. The terminal of claim 9, wherein the LP-WUS is received through at least one monitoring occasion (MO) within a single LP-WUS occasion.

11. The terminal of claim 8, wherein the LP-SS and the SSB have a one-to-one correspondence.

12. The terminal of claim 11, wherein the one-to-one correspondence between the LP-SS and the SSB is based on an index of the LP-SS and an index of the SSB.

13. The terminal of claim 9, wherein operations performed based on the instructions executed by the at least one processor further comprise:
receiving configuration information of the LP-WUS,
wherein the configuration information of the LP-WUS includes QCL relationship information with at least one of the SSB and a channel state information-reference signal (CSI-RS).

14. The terminal of claim 10, wherein a number of the at least one MO is based on a number of indexes available for the LP-SS.
